# EUROPÄISCHE PATENTANMELDUNG

(11) **EP 0 724 083 A1**
(43) Veröffentlichungstag der Anmeldung: **31.07.1996**
(21) Anmeldenummer: 96100984.2
(22) Anmeldetag: 24.01.1996
(51) Int. Cl.: F16B 7/02, F16B 7/04

(54) **Vorrichtung zum biegefesten Verbinden zweier Rohre**

(30) Priorität: 27.01.1995 DE 19502618
(71) Anmelder: Sacher, Dominic, D-82041 Oberhaching (DE)
(72) Erfinder: Sacher, Dominic, D-82041 Oberhaching (DE)
(74) Vertreter: Flosdorff, Jürgen, Dr.

(57) **Zusammenfassung**

Die Rohrverbindungsvorrichtung besteht aus zwei Rohrhülsen (1) und einem Rohrstecker (9). Die Rohrhülsen (1) haben jeweils einen rohrförmigen Abschnitt (2), der formschlüssig in das zugeordnete Rohrende (3) eingesteckt wird, sowie einen axial anschließenden rohrförmigen Ansatz (5). Der Rohrstecker (9) enthält an den freien Enden eine konische Ansenkung (13), daran zur Mitte hin anschließend zwei zylindrische Abschnitte (12) sowie anschließende sich konisch zur Mitte hin erweiternde Abschnitte (11), die in der Mitte aneinander anschließen. Die rohrförmigen Abschnitte (2) jeder Rohrhülse werden bevorzugt am Rohrende (3) angeschweißt. Der Rohrstecker (9) wird im wesentlichen vollständig in die Ansätze (5) eingesteckt, wobei die zentralen konischen Abschnitte (11) an den konischen Ansenkungen (6) der Ansätze (5) anliegen. Die Verbindung wird durch einen konischen Stift (16) gesichert, der miteinander fluchtende Bohrungen (7,15) durch die Wand der Ansätze (5) und des Rohrsteckers (9) durchgreift. Die Rohrverbindung hat kleine Abmessungen und hält größten statischen und dynamischen Belastungen stand.

## Beschreibung

Die Erfindung betrifft eine Vorrichtung zum biegefesten Verbinden zweier Rohre, die ohne Werkzeug schnell und einfach herstellbar und wieder zu lösen ist. Die Erfindung kann mit besonderem Vorteil auch zum lösbaren Verbinden von Gitterträgern verwendet werden, bei denen zwei oder drei die Längsträger bildende Rohre mittels angeschweißter Diagonalstäbe miteinander verbunden sind.

Zwei Rohre werden auf herkömmliche Weise dadurch biegefest miteinander verbunden, daß ein Verbindungsrohrstück in die beiden Rohre eingesetzt und an diesen befestigt wird. Hierzu muß zunächst das Innenrohr zugeschnitten werden, und anschließend werden Löcher sowohl in die zu verbindenden Rohre als auch in das Verbindungsrohr gebohrt, woraufhin diese Löcher entgratet werden müssen, bevor die sich überlappenden Rohre zusammengeschraubt werden können. Wenn die zu verbindenden Rohre die Längsträger eines Gitterträgers sind, muß zuvor noch die Innenfläche der Rohre bearbeitet werden, beispielsweise eine dort befindliche Schweißnaht entfernt werden, bevor das Innenrohr überhaupt einsetzbar ist.

Eine solche herkömmliche Verbindung hat in aller Regel den Nachteil, daß das Verbindungsrohr nicht vollkommen fest, d.h. völlig ohne Spiel in den Außenrohren sitzt und daß die Löcher im Falle höherer Zugkräfte und geringer Wandstärke der Rohre ausreißen. Außerdem ist die Herstellung der Verbindung zwischen den Rohren mit einem großen Arbeitsaufwand verbunden, der entsprechend hohe Kosten mit sich bringt. Ein zusätzliches Problem besteht darin, die Löcher in den zu verbindenden Rohren und dem inneren Verbindungsrohr fluchtend auszubilden, so daß die Gewindebolzen die Löcher durchgreifen können.

In der DE-OS 42 44 208 ist bereits eine werkzeuglose Schnellverbindung für Rohre vorgeschlagen worden, bei der zwei Rohrverbinder mit hülsenförmigen Abschnitten auf die beiden zu verbindenden Rohrenden aufgesteckt und an diesen angeschweißt werden, wobei die Rohrverbinder massive konische Ansätze haben, die formschlüssig in die konischen Bohrungen eines Zwischenteils eingreifen, wobei dieser Eingriff durch durchgesteckte Stifte gesichert wird. Diese Rohrverbindung hat sich zwar in der Praxis bewährt, hat aber den Nachteil, daß sie gegenüber den zu verbindenden Rohren verhältnismäßig groß ist und das Erscheinungsbild der zusammengesetzten Rohrkonstruktion beeinträchtigt.

Der vorliegenden Erfindung liegt die Aufgabe zugrunde, eine Verbindungsvorrichtung der betrachteten Art anzugeben, die so klein ist, daß sie das Erscheinungsbild der verbundenen Rohre nicht beeinträchtigt, und die dennoch hohen Belastungen, auch hohen dynamischen Belastungen, standhält.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Die erfindungsgemäße Verbindungsvorrichtung enthält zwei Rohrbuchsen, die mit einem rohrförmigen Abschnitt jeweils in das zugeordnete Rohrende eingesteckt werden und die einen axial anschließenden, rohrförmigen Ansatz mit einer inneren konischen, bis zum freien Ende verlaufenden Ansenkung bzw. eine konische Aufweitung haben. Ein bevorzugt massiv ausgebildeter Rohrstecker greift in die beiden Ansätze ein, wobei sich mittige konische Abschnitte des Rohrsteckers an die konischen Ansenkungen am freien Ende der Ansätze anlegen. Die rohrförmigen Abschnitte werden an den Rohrenden und die rohrförmigen Ansätze an dem Rohrstecker befestigt.

Hierbei ist bevorzugt, daß die Ansätze der Rohrbuchsen denselben Außendurchmesser haben wie die zu verbindenden Rohre, wobei die ringförmigen Schultern der Rohrbuchsen beim Übergang der rohrförmigen Abschnitte in die rohrförmigen Ansätze radiale Abmessungen haben sollten, die mit der Wandstärke der Rohre übereinstimmen. Wenn aufgrund besonderer Umstände Rohre gleichen Außendurchmessers, jedoch unterschiedlicher Wandstärke miteinander verbunden werden sollen, können zwei Rohrbuchse hierzu eingesetzt werden, die sich nur im Außendurchmesser der rohrförmigen Abschnitte unterscheiden.

Die erfindungsgemäße Rohrverbindung ist dadurch, daß die Rohrbuchsen in die Rohre eingreifen und der Rohrstecker in die Ansätze der Rohrbuchsen eingesetzt wird, klein ausgebildet, wobei in einer bevorzugten Ausführungsform der Rohrverbinder denselben Außendurchmesser hat wie die zu verbindenden Rohre, so daß der Rohrverbinder praktisch nicht in Erscheinung tritt. Hierdurch ist zur Herstellung der Teile des Rohrverbinders nur verhältnismäßig wenig Material erforderlich, wodurch der Rohrverbinder ein geringes Gewicht hat. Dennoch hält er sehr hohen statischen und dynamischen Belastungen stand, insbesondere dann, wenn der Rohrstecker massiv ausgebildet ist. Versuche des Anmelders haben ergeben, daß bei Überlastungen von mit den erfindungsgemäßen Rohrverbindern zusammengesetzten Rohren ein Bruch nicht im Bereich der Verbindung, sondern in einem Abstand von dieser stattfindet, woraus zu ersehen ist, daß die Rohrverbindung eine höhere Festigkeit hat als die zu verbindenden Rohre.

Die rohrförmigen Abschnitte können mit allen geeigneten Maßnahmen an den Rohrenden befestigt werden, wobei bevorzugt ist, sie dort anzuschweißen. Eine Befestigung mit Klebemittel oder mit Nieten kommt auch in Betracht.

Der Rohrstecker hat vorzugsweise eine zu seiner Mitte symmetrische Form, d.h. er besteht aus zwei identischen Hälften, wenn er zur Verbindung zweier gleicher Rohre vorgesehen ist. Es liegt aber auch im Rahmen der Erfindung, daß der Rohrstecker Rohrenden unterschiedlicher Durchmesser verbindet, die mit jeweils passenden Rohrbuchsen versehen sind, wobei dann die beiden axialen Hälften des Rohrsteckers unterschiedliche Radien haben.

In einer bevorzugten Ausgestaltung der Erfindung wird der Rohrstecker im wesentlichen mit jeweils einer axialen Hälfte in den zugeordneten rohrförmigen Ansatz eingesteckt. Hierdurch wird eine besonders kurze Bauform der Rohrverbindung erreicht. Der Rohrstecker hat vorzugsweise zwei axial beabstandete zylindrische Abschnitte, deren Außendurchmesser etwas kleiner als der Innendurchmesser der rohrförmigen Ansätze in Einsteckrichtung hinter den konischen Ansenkungen ist, und daran anschließende, sich bis zur Mitte erstreckende konische Erweiterungen, die in der Mitte des Rohrsteckers aneinander angrenzen. Der Konuswinkel der konischen Erweiterungen stimmt mit dem Winkel der konischen Ansenkung der Ansätze überein, so daß nach dem formschlüssigen Einsetzen des Rohrsteckers in die Ansätze ein hoher Klemm- und Reibungswiderstand hochgradig zu einer spielfreien Verbindung beiträgt. An den freien Enden verjüngt sich der Rohrstecker bevorzugt ebenfalls konisch, jedoch mit einem größeren Konuswinkel, der beispielsweise 15° betragen kann, wodurch der Rohrstecker leicht in die Ansätze einzuführen ist. Der Konuswinkel der Ansenkung der Ansätze beträgt bevorzugt etwa 12°.

Der Rohrstecker wird in weiterer Ausgestaltung der Erfindung durch einen Stift, bevorzugt einen Stahlstift, an den rohrförmigen Ansätzen befestigt, wozu durch den Rohrstecker sowie die Wand der Ansätze in Querrichtung verlaufende Bohrungen ausgebildet sind. Wenn der Stift konisch ausgebildet ist, erleichtert dies nicht nur das Einsetzen in die Bohrungen, sondern es wird auch ein eventuell noch verbliebenes Spiel zwischen dem Rohrstecker und den Ansätzen beseitigt.

Wenn die Bohrungen des Rohrsteckers und der rohrförmigen Ansätze nicht genau miteinander fluchten, kann der Stift beispielsweise mit Hilfe eines Gummihammers sehr gut eingeschlagen werden, was ebenfalls durch die konische Form des Stiftes erleichtert ist.

Das dünnere Ende des Stiftes steht über den zugehörigen Ansatz hinaus vor. Wenn dieses Stiftende mit einer dünnen Bohrung versehen ist, kann eine Sicherungsklammer in die Bohrung eingesetzt werden, wodurch die gesamte Rohrverbindung gesichert.

Die Bohrungen durch die Ansätze und den Rohrstecker können durchgehend denselben Durchmesser haben, also insgesamt eine Zylinderform, wodurch sich auch beim Einsetzen eines konischen Stiftes - auf den die Erfindung nicht beschränkt ist - eine spielfreie Verbindung ergibt. Die genannten Bohrungen können aber auch insgesamt eine Form haben, die in etwa der Außenkontur des Stiftes entspricht.

Die erfindungsgemäße Rohrverbindung deren Bestandteile bevorzugt aus AlMgSi 1 bestehen, ist eine werkzeuglose, spielfreie Schnellverbindung für Rohre jeglichen Durchmessers. Ein großer Vorteil besteht darin, daß durch die konischen Verbindungen des Rohrsteckers mit den Ansätzen sowie des konischen Stiftes die Rohrverbindungen auch auf Umschlag passen, z.B. bei Dreipunkt- oder Vierpunkt-Trägertraversen, so daß die Schweißvorrichtungen nicht mehr so genau gefertigt werden müssen, da die Rohrverbindung auch dann herstellbar ist, wenn die Achsen der zu verbindenen Rohre nicht hundertprozentig exakt zueinander stehen.

Ein weiterer Vorteil des erfindungsgemäßen Rohrverbinders besteht darin, daß die Baurichtung beim Aufbau eines Träger- oder Rohrsystems nicht mehr vorgegeben ist. Der Zusammenbau kann an beliebiger Stelle beginnen, wobei sichergestellt ist, daß die Rohrenden am Ende zusammenpassen, da alle Rohre mit einer Rohrbuchse enden und alle Verbindungen stets mit dem achssymmetrischen Rohrstecker hergestellt werden. Der erfindungsgemäße Rohrverbindung bringt einen sogenannten female-male/male-female-Aufbau mit sich, bei dem keine Baurichtung vorgeschrieben ist.

Weitere Einzelheiten der Erfindung ergeben sich aus der nachfolgenden Beschreibung einer bevorzugten Ausführungsform der erfindungsgemäßen Rohrverbindung. Dabei zeigen:
- Fig. 1: einen Längsschnitt durch eine Rohrbuchse;
- Fig. 2: eine Seitenansicht eines Rohrsteckers;
- Fig. 3: eine teilweise geschnittene Seitenansicht eines konischen Verriegelungsstiftes mit Sicherungsklammer.

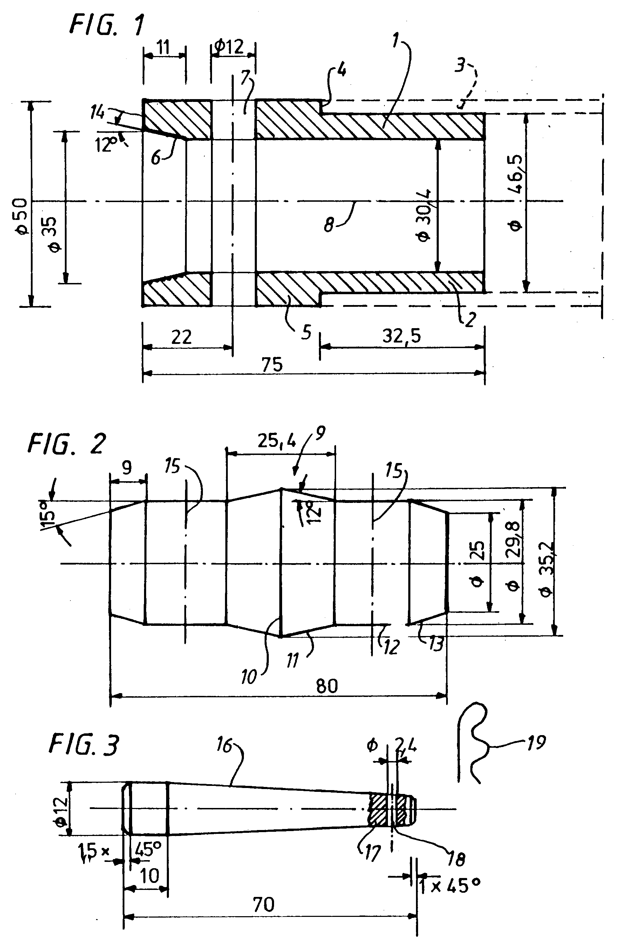

Die in Fig. 1 dargestellte Rohrbuchse 1 enthält einen rohrförmigen Abschnitt 2, der bis zu einer Schulter 4 in ein nur gestrichelt dargestelltes Rohrende 3 eingeschoben und in dieser Lage durch Schweißen dauerhaft befestigt wird. An der Schulter 4 beginnt der rohrförmige Ansatz 5, der über das stirnseitige Ende des Rohres 3 übersteht und denselben Außendurchmesser hat wie das Rohr 3, so daß der Ansatz 5 optisch eine glatte Verlängerung des Rohres 3 bildet.

Das freie vordere Ende des Ansatzes 5 enthält eine innere konische Ansenkung 6, wobei der Konuswinkel 12° beträgt. Im Abstand hinter der konischen Ansenkung 6 erstreckt sich eine Durchgangsbohrung 7 quer zur Längsachse 8 durch die Wand des Ansatzes 5. Die Bohrung 7 hat in dem dargestellten Ausführungsbeispiel eine Zylinderform.

Der in Fig. 2 dargestellte Rohrstecker 9 ist spiegelsymmetrisch zu einer Ebene 10 ausgebildet und enthält - ausgehend von der Mittelebene 10 - jeweils einen konischen Abschnitt 11, dessen Konuswinkel ebenfalls 12° beträgt, daran anschließend einen zylindrischen Abschnitt 12, dessen Außendurchmesser ca. 0,6 mm kleiner ist als der Innendurchmesser der Rohrbuchse 1 sowie am freien Ende eine weitere konische Abschrägung 13, die einen Winkel von 15° hat.

Der Rohrstecker 9 wird beiderseits in die Ansätze 5 eingeführt, was durch die konische Ansenkung 13 erleichtert ist. Da der zylindrische Abschnitt 12 etwas geringere Abmessungen hat als der Innenraum der Rohrbuchse 1, läßt sich auch dieser Abschnitt leicht einführen, bis die konische Fläche 11 in Anlage an die konische Ansenkung 6 gerät. In dieser Position ist der Rohrstecker 9 fast vollständig in die Rohrbuchsen 1 eingeführt. Zwischen den Stirnflächen 14 der Rohrbuchsen 1 verbleibt allenfalls ein Zwischenraum von einigen Millimeter.

Der Rohrstecker 9 ist massiv ausgebildet und enthält in den zylindrischen Abschnitten 12 jeweils eine Durchgangsbohrung 15, von der in Fig. 2 nur die Achse angedeutet ist. Wenn der Rohrstecker 9 in die Rohrbuchsen 1 eingesetzt ist, fluchten die Bohrungen 15 weitgehend mit den Bohrungen 7 der Rohrbuchsen, so daß der in Fig. 3 dargestellte Kegelstift 16 in die Bohrungen 7, 15 eingesetzt werden kann. Der Kegelstift wird soweit eingesetzt, daß das Kopfende nahezu in der Bohrung 7 verschwindet, wobei natürlich gewährleistet ist, daß der Kegelstift nicht durchrutschen kann. Das untere Ende 17 steht aus der unteren Bohrung 7 vor. Zur Sicherung der Verbindung wird eine Sicherungsklammer 19 durch eine Bohrung 18 in dem unteren Ende des Kegelstifts 16 geführt.

## Patentansprüche

1. Vorrichtung zum biegefesten Verbinden zweier Rohre,
**gekennzeichnet durch**
zwei Rohrbuchsen (1) mit jeweils einem in das zugeordnete Rohrende (3) eingesteckten rohrförmigen Abschnitt (2) mit einer radial nach außen weisenden Schulter (4) als Anschlag für das zugeordnete Rohrende (3) und einem axial anschließenden, rohrförmigen Ansatz (5) mit einer inneren konischen Ansenkung (6) an dem freien Ende, und einen Rohrstecker (9), der in beide Ansätze (5) eingreift, wobei die rohrförmigen Abschnitte (2) an den Rohrenden (3) und der Rohrstecker (9) an den Ansätzen (5) befestigt sind.

2. Vorrichtung nach Anspruch 1,
dadurch gekennzeichnet, daß der rohrförmige Abschnitt (2) im wesentlichen formschlüssig in das zugehörige Rohrende (3) eingesteckt ist.

3. Vorrichtung nach Anspruch 1 oder 2,
dadurch gekennzeichnet, daß die beiden Ansätze (5) der Rohrbuchsen (1) denselben Außendurchmesser wie die zu verbindenden Rohre haben, und daß die Schultern (4) der Rohrbuchsen (1) jeweils radiale Abmessungen haben, die mit der Wandstärke der Rohre übereinstimmen.

4. Vorrichtung einem der Ansprüche 1 bis 3,
dadurch gekennzeichnet, daß der Rohrstecker (9) im wesentlichen mit jeweils einer axialen Hälfte in den zugeordneten Ansatz (5) eingesteckt ist.

5. Vorrichtung nach einem der Ansprüche 1 bis 4,
dadurch gekennzeichnet, daß die beiden Ansätze (5) den Rohrstecker (9) im wesentlichen formschlüssig in sich aufnehmen.

6. Vorrichtung nach einem der Ansprüche 1 bis 5,
dadurch gekennzeichnet, daß der Rohrstecker (9) zwei axial beabstandete zylindrische Abschnitte (12), deren Außendurchmesser etwas kleiner als der Innendurchmesser der rohrförmigen Ansätze (5) ist, und daran zur Mitte hin anschließende, aneinander angrenzende äußere konische Abschnitte (10) aufweist, deren Konuswinkel mit demjenigen der konischen Ansenkung (6) der Ansätze (5) übereinstimmt.

7. Vorrichtung nach einem der Ansprüche 1 bis 6,
dadurch gekennzeichnet, daß der Rohrstecker (9) an beiden freien Enden weitere konische Ansenkungen (13) aufweist.

8. Vorrichtung nach einem der Ansprüche 1 bis 7,
dadurch gekennzeichnet, daß der Rohrstecker (9) massiv ausgebildet ist.

9. Vorrichtung nach einem der Ansprüche 1 bis 8,
dadurch gekennzeichnet, daß die Ansätze (5) durch jeweils einen Stahlstift (16) an dem Rohrstecker (9) befestigt sind, wobei der Stahlstift (16) Bohrungen (7, 15) durch die Wand der Ansätze (5) und durch den Rohrstecker (9) durchgreift.

10. Vorrichtung nach Anspruch 9,
dadurch gekennzeichnet, daß der Stahlstift (16) sich konisch verjüngt.
